Europäisches Patentamt

European Patent Office

Office européen des brevets

(19)

(11) EP 0 867 737 A2

(12) EUROPÄISCHE PATENTANMELDUNG

(43) Veröffentlichungstag:
30.09.1998 Patentblatt 1998/40

(51) Int. Cl.$^6$: G02B 6/255

(21) Anmeldenummer: 98105137.8

(22) Anmeldetag: 20.03.1998

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 26.03.1997 DE 19712780

(71) Anmelder:
SIEMENS AKTIENGESELLSCHAFT
80333 München (DE)

(72) Erfinder:
• Rügenberg, Gervin, Dipl.-Ing.
  80689 München (DE)
• Drobner, Franz, Dipl.-Ing. (FH)
  81371 München (DE)

(54) **Verfahren und Vorrichtung zum Verbinden mindestens zweier Lichtleitfasern mittels Lichtbogen**

(57)     Zur Kompensation von Störeinflüssen beim Lichtbogen-Verschweißen mindestens zweier Lichtleitfaserenden (LF1, LF2) wird die Impedanz (IP) der Entladungsstrecke (LB) des Lichtbogens (LB) gemessen, und aufgrund der gemessenen Impedanz (IP) mindestens einer der Schweißparameter verändert.

FIG 1

**Beschreibung**

Die Erfindung betrifft ein Verfahren zum Verbinden der beiden Enden mindestens zweier optischer Lichtleitfasern mittels eines elektrischen Lichtbogens, der zwischen zwei Elektroden erzeugt wird.

Aus der EP-A1 0 504 519 ist ein Lichtwellenleiter-Schweißgerät bekannt, bei dem ein Drucksensor vorgesehen ist, welcher ein von dem gemessenen atmosphärischen Druck abhängiges Steuersignal erzeugt. Aufgrund des so gemessenen Luftdrucks wird der jeweils angewendete Entladestrom auf einen vorgegebenen Wert eingestellt. Der Nachteil dieses Verfahrens besteht neben dem nicht unerheblichen Aufwand für die Druckmeßdose sowie der daraus abzuleitenden Steuergröße vor allem darin, daß der Luftdruck allein nicht die maßgebende Größe für die Erzielung eines optimalen Schweißvorganges darstellt.

Aus der WO 95/24664 ist ein Verfahren zum Verschweißen der Enden optischer Fasern bekannt, bei dem die Stellgrößen für den Lichtbogen so gewählt werden, daß die elektrische Leistung beim Schweißvorgang selbst konstant gehalten wird. Hierzu wird eine Spannung erzeugt, welche proportional der jeweils augenblicklichen Leistung ist und diese Spannung wird an eine Steuereinrichtung gegeben, welche ein elektrisches Stellglied so verändert, das die Leistung jeweils im wesentlichen während des Schweißvorganges (konkret während der Brenndauer) konstant gehalten wird. Auch dieses Verfahren bezieht die möglichen, eine Qualität der Schweißverbindung bestimmenden Größen in unzureichendem Maße ein.

Aus der DE 41 19 654 A1 ist ein Lichtbogen-Schweißverfahren für Lichtleitfasern bekannt, bei dem ein Lichtbogen zwischen den Elektroden erzeugt wird und ein konstanter Entladungsstrom fließt. Während des Lichtbogenschweißens wird die Spannungskennlinie zwischen den Elektroden in Abhängigkeit von der Schweißzeit aufgezeichnet. Der Schweißvorgang selbst wird abgebrochen, wenn ein bestimmtes, spannungsabhängiges Kriterium der so aufgezeichneten Spannungskennlinie erreicht ist. Dieses Verfahren dient dazu, eine automatische Schweißparameteranpassung bei unterschiedlichen Lichtwellenleitertypen zu erreichen.

Der Erfindung liegt die Aufgabe zugrunde, in möglichst einfacher Weise die Einstellung von Schweißparametern so vorzunehmen, daß eine möglichst gute, von Umwelt- bzw. Umgebungs- und/oder Geräteeinflüssen weitgehend unabhängige Schweißverbindung hergestellt wird. Diese Aufgabe wird bei einem Verfahren der eingangs genannten Art dadurch gelöst, daß die Impedanz der Entladungsstrecke gemessen wird, und daß aufgrund der gemessenen Impedanz mindestens einer der Schweißparameter so verändert wird, daß ein für die jeweiligen Umweltbedingungen und/oder für den jeweiligen Gerätezustand optimales Schweißergebnis erreicht wird.

Durch diese Impendanzmessung lassen sich Umwelt- bzw. Umgebungseinflüsse (wie z.B. Luftdruck) und/oder Geräteeinflüsse (wie z.B. Elektrodenzustand) beim Verschweißen weitgehend berücksichtigen, insbesondere kompensieren. Auf diese Weise können die jeweiligen beiden Lichtleitfaserenden unter einer Vielzahl praktischer Gegebenheiten in einfacher Weise einwandfrei, d.h. wirkungsvoll, miteinander verschweißt werden.

Die Erfindung betrifft auch eine Vorrichtung zum Verbinden der beiden Enden mindestens zweier optischer Fasern mittels eines elektrischen Lichtbogens zwischen zwei Elektroden, welche dadurch gekennzeichnet ist, daß Meßmittel zur Ermittlung der Impedanz der Entladungsstrecke vorgesehen sind, und daß Steuermittel aufgrund der gemessenen Impedanz mindestens einen der Schweißparameter so verändern, daß ein für die jeweiligen Umweltbedingungen und/oder für den jeweiligen Gerätezustand optimales Schweißergebnis erreichbar ist.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

Figur 1      schematisch in teilweise perspektivischer Darstellung den Grundaufbau einer Schweißvorrichtung zur Durchführung des erfindungsgemäßen Verfahrens,

Figur 2      gemessene Impedanzwerte der Glimmentladungsstrecke der Schweißvorrichtung nach Figur 1 in Abhängigkeit von der Höhe,

Figur 3      gemessene Entladestromwerte der Schweißvorrichtung nach Figur 1, die für jeweils gleiche Fasererwärmung bei unterschiedlichen Höhen erforderlich werden, und

Figur 4      die Prinzipschaltung eines Hochspannungsgenerators für die Schweißvorrichtung nach Figur 1.

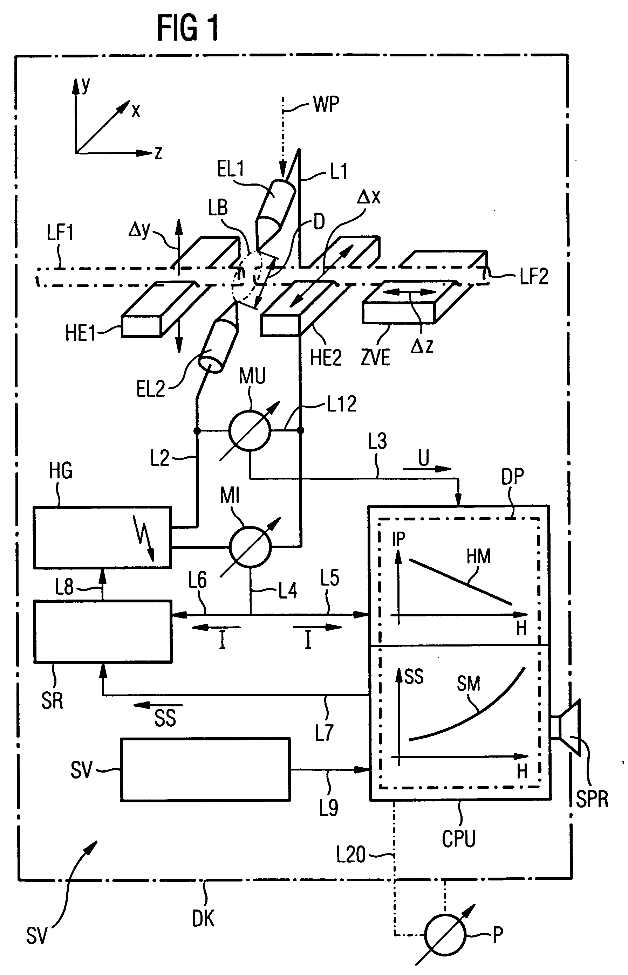

Elemente mit gleicher Funktion und Wirkungsweise sind in den Figuren 1 mit 4 jeweils mit den gleichen Bezugszeichen versehen.

Figur 1 zeigt schematisch eine Schweißvorrichtung SV, die insbesondere Bestandteil eines Lichtwellenleiter-Spleißgerätes ist. Sie weist zwei sich gegenüberstehende Halteeinrichtungen HE1, HE2 (wie zum Beispiel Manipulatoren) bekannter Bauart auf, die der Aufnahme und Lagepositionierung von mindestens zwei miteinander zu verschweißenden Lichtleitfaserenden dienen. In der Figur 1 ist die Halteeinrichtung HE1 für eine Lichtleitfaser LF1 sowie die Halteeinrichtung HE2 für eine Lichtleitfaser LF2 vorgesehen. Die Lichtleitfasern sind dabei lediglich strichpunktiert gezeichnet, da sie erst später für den eigentlichen Schweißvorgang in die Schweißvorrichtung SV eingelegt werden. Um die beiden sich in Längsrichtung einander gegenüberstehenden Enden der beiden Lichtleitfasern LF1, LF2 vor ihrem Verschweißen in lateraler Richtung ( bezogen auf ihre Faserlängsachsen) möglichst fluchtend aufeinander ausrichten zu können, ist mindestens eine der beiden Halteeinrichtungen HE1, HE2 in mindestens eine Raumrichtung, insbesondere quer, bevorzugt senkrecht zur jeweiligen Faserlängsachse verschiebbar ausgebildet. Im vorliegenden Beispiel ist angenommen, daß die erste Halteeinrichtung HE1 eine Bewegung in y-Richtung sowie die Halteeinrichtung HE2 eine Bewegung in x-Richtung eines kartesischen Koordinatensystems x, y, z zuläßt. Die jeweilige Verschiebebewegung in x bzw. y-Richtung ist durch Doppelpfeile $\Delta y$ sowie $\Delta x$ angedeutet. Um die Enden der beiden optischen Fasern LF1, LF2 zur Bildung einer Schweißverbindung aufeinander zuzufahren und miteinander kontaktieren zu können, ist in der Figur 1 der Halteeinrichtung HE2 zusätzlich eine Verfahreinheit ZVE zugeordnet, mit der sich die Lichtleitfaser LF2 in Faserlängsrichtung, das heißt hier in z-Richtung auf die Lichtleitfaser LF1 zu bewegen läßt. Zusätzlich oder unabhängig hiervon kann gegebenenfalls auch der Haltevorrichtung HV1 der ersten Lichtleitfaser LF1 zum Verschieben in Faserlängsrichtung eine entsprechende Verfahreinheit zugeordnet werden. Die Verschiebebewegung in z-Richtung ist dabei mit einem Doppelpfeil $\Delta z$ angedeutet. Die Raumrichtung z gibt also eine Längsrichtung vor, entlang der jedes der beiden Faserenden LF1, LF2 fluchtend aufeinander ausgerichtet werden soll.

Die Schweißvorrichtung SV weist als wesentlichen Bestandteil zwei Elektroden EL1, EL2 auf, die im Zwischenraum zwischen den beiden Halteeinrichtungen HE1, HE2 auf gegenüberliegenden Längsseiten der Lichtleitfasern LF1, LF2 in einem vorgebbaren Quer-Abstand angeordnet sind. Entlang einer Entladungsstrecke D zwischen den beiden Elektroden EL1, EL2 kann sich somit queraxial, insbesondere senkrecht zum axialen Längsverlauf der beiden Lichtleitfasern LF1, LF2 ein Glimmentladungs-Lichtbogen ausbilden. In der Figur 1 ist der Verlauf des Lichtbogens LB strichpunktiert angedeutet.

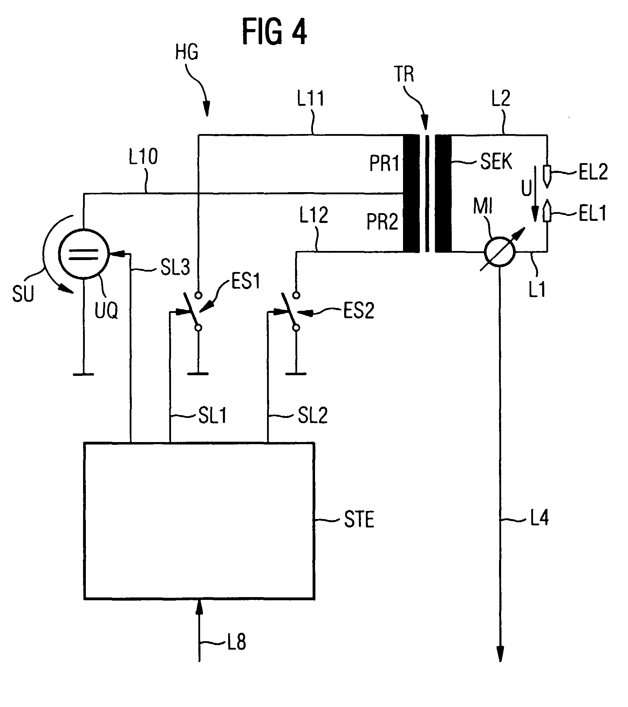

Zur Erzeugung und Speisung der Glimmentladung des Lichtbogens LB ist die jeweilige Schweißelektrode EL1, EL2 über eine zugehörige Stromleitung L1, L2 an einen Hochspannungsgenerator HG angeschlossen. Dieser Hochspannungsgenerator HG liefert die Spannung zum Zünden und die Leistung zur Aufrechterhaltung der Glimmentladung zwischen den beiden Elektroden EL1, EL2. (Figur 4 zeigt die Prinzipschaltung dieses Hochspannungsgenerators im Detail.)

Würde mit Hilfe des Hochspannungsgenerators HG für die Glimmentladung jeweils derselbe, konstante Stromwert zwischen den beiden Elektroden EL1, EL2 für alle Schweißvorgänge dauerhaft, das heißt fest eingestellt werden, so wäre dieser einmalig festgelegte und beibehaltene Stromwert zur Glimmentladungsspeisung für den Schweißvorgang bei wechselnden Umwelt- bzw. Umgebungs- und/oder Geräteeinflüssen manchmal zu hoch und manchmal zu niedrig. In umfangreichen Tests wurde nämlich gefunden, daß die tatsächliche Fasererwärmung nicht nur vom Strom bzw. von der Leistung der Glimmentladung abhängt, sondern auch von Umwelt- bzw. Umgebungseinflüssen wie zum Beispiel Luftdruck, Umgebungstemperatur, Luftfeuchtigkeit, Gaszusammensetzung der Umgebungsluft, usw, und/oder vom Gerätezustand wie z.B. Elektrodenzustand beeinflußt werden kann. Solche in Abhängigkeit von Ort und Zeit wechselnde Störeinflüsse würden den normalen Ablauf des Schweißvorgangs zur Herstellung einer optimalen, thermischen Schweißverbindung zwischen zwei Lichtwellenleitern beeinträchtigen, da die für eine einwandfreie Schweißverbindung erforderliche Fasererwärmung in manchen Fällen zu hoch und in manchen Fällen zu niedrig werden würde.

Um nun für den jeweiligen Schweißvorgang eine weitgehende Kompensation dieser Umwelt- bzw Umgebungseinflüsse und/oder des Gerätezustandes in besonders einfacher Weise zu ermöglichen, wird in vorteilhafter Weise die elektrische Impedanz der Entladungsstrecke D des Lichtbogens LB während des Glimmentladungsvorgangs erfaßt und aus dieser gemessenen Impedanz mindestens eine Steuergröße zur Korrektur der Störeinflüsse auf die Glimmentladungsvorgänge abgeleitet. Mit Hilfe dieser Steuergröße läßt sich dann mindestens einer der Schweißparameter wie zum Beispiel Schweißstrom, Schweißleistung, Schweißzeit, usw. In vorteilhafter Weise derart verändern, daß ein für die jeweilige Umweltbedingung und/oder für den jeweiligen Schweißgerätezustand optimales Schweißergebnis erhalten werden kann. Dabei wird in vorteilhafter Weise ausgenutzt, daß nicht nur die Fasererwärmung sondern auch insbesondere die elektrische Impedanz der Glimmentladungsstrecke D von den Umwelt- bzw. Umgebungsbedingungen und/oder dem Schweißgerätezustand abhängt. Dabei ist die elektrische Impedanz der Entladungsstrecke D eine komplexe Größe. Untersuchungen haben gezeigt, daß sowohl der Realteil (= ohmscher Anteil) als auch der Imaginärteil (= induktive und kapazitive Anteile) der komplexen Impedanz vorzugsweise hauptsächlich durch folgende Parameter einzeln oder in beliebiger Kombination beeinflußt werden:

- Umweltbedingungen (Luftdruck, Temperatur, Feuchtigkeit, Gaszusammensetzung der Umgebungsluft),
- Gerätezustand, insbesondere Elektrodenart und/oder Elektrodenzustand,
- Stromstärke der Glimmentladung
- Frequenzspektrum der Glimmentladung.

Diese vielfachen Abhängigkeiten werden insbesondere durch die komplexen Vorgänge einer Glimmentladung (, vorzugsweise durch die Lebensdauer deren Ionen, ) verursacht. Da der ohmsche Anteil der elektrischen Impedanz im wesentlichen dieselben Abhängigkeiten von den Umgebungsbedingungen und/oder Gerätezustand wie die komplexe Impedanz aufweist, genügt es insbesondere bereits, lediglich die ohmsche Impedanz zu erfassen und daraus mindestens ein entsprechendes Steuerkriterium zur optimalen Anpassung der Schweißparameter an die jeweilig vorherrschenden Umwelt- und/oder Gerätebedingungen zu ermitteln. Dadurch läßt sich der Meßaufwand ganz erheblich vereinfachen und ohne großen Aufwand realisieren. Außerdem können Frequenzspektrum und Stromstärke der Glimmentladung durch eine dem Hochspannungsgenerator HG zugeordnete Stromregelungsvorrichtung SR weitgehend konstant gehalten werden, so daß bezüglich dieser Einflußgrößen immer etwa gleiche Verhältnisse vorliegen. Mit diesen Vereinfachungen bleibt somit in vorteilhafter Weise lediglich eine Abhängigkeit der ohmschen Impedanz von den Umgebungsbedingungen (wie zum Beispiel Luftdruck, Temperatur, Feuchtigkeit, Gaszusammensetzung) und dem Gerätezustand, insbesondere Elektrodenzustand übrig. Dabei hat insbesondere der Luftdruck sowie der Grad der Elektrodenverschmutzung den bei weitem stärksten Einfluß auf den Wert der ohmschen Impedanz der Entladungsstrecke D. Andere Umgebungseinflüsse wie zum Beispiel Lufttemperatur und Luftfeuchtigkeit zeigen sinngemäß, d.h. tendenziell, etwa das gleiche Verhalten auf die ohmsche Impedanz, allerdings wesentlich weniger ausgeprägt, so daß sie in der Praxis in erster Näherung meist vernachlässigbar sind.

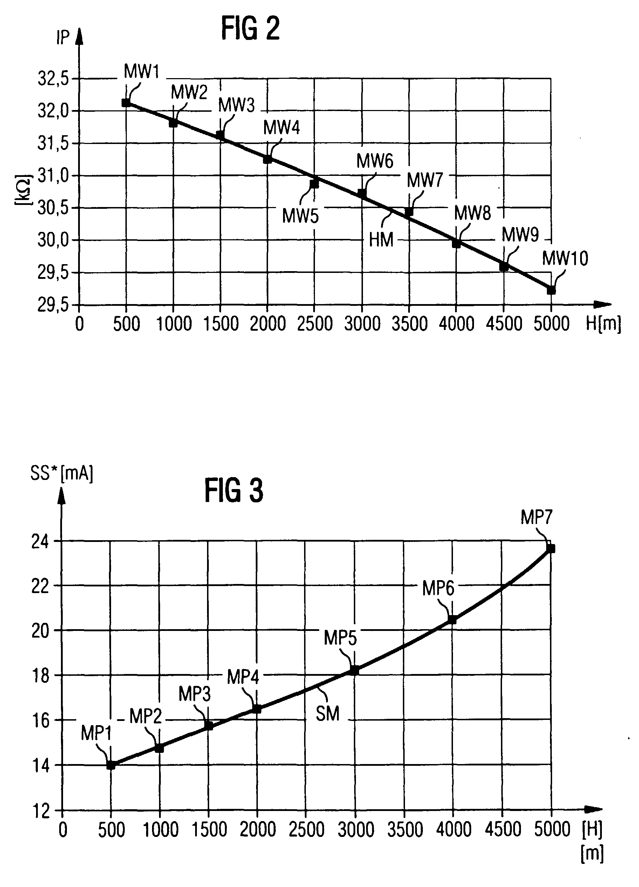

Figur 2 zeigt den an einer praktischen Entladungsstrecke wie zum Beispiel D von Figur 1 gemessenen Verlauf HM der ohmschen Impedanz IP in Abhängigkeit von der Ortshöhe H, die ja jeweils für einen bestimmten atmosphärischen Luftdruck in erster Linie maßgebend ist. Dabei war für die Glimmentladung beispielhaft ein effektiver Entladestrom I von etwa 15 mA vorgegeben. Zur Ermittlung der Impedanzmeßkurve nach Figur 2 ist es nicht erforderlich, daß der dabei verwendete Entladestromwert dem späteren tatsächlichen Schweißstromwert entspricht. Um größere Ungenauigkeiten von den Realbedingungen beim eigentlichen Schweißvorgang zu vermeiden, ist es allerdings zweckmäßig, annäherungsweise etwa den tatsächlichen Schweißstromwert einzustellen. Die Aufnahme dieses Impedanzverlaufes HM in Abhängigkeit von der Ortshöhe H über dem Meeresspiegel kann beispielsweise mit der Schweißvorrichtung SV von Figur 1 selbst erfolgen. Insbesondere sind dabei keine Lichtleitfasern in die Schweißvorrichtung SV eingelegt, um etwaig von den Lichtleitfasern herrührende Störungen für die Impedanzmessung weitgehend zu vermeiden. Der Elektrodenabstand zwischen den beiden Elektroden EL1, EL2 ist dabei vorzugsweise fest vorgegeben und entspricht der Entladungsstreckenlänge D für den eigentlichen Schweißvorgang. Vorzugsweise ist der Elektrodenabstand zwischen 0,5 und 5 mm gewählt. Zur Aufnahme des Impedanzverlaufs bzw. der Meßkurve HM wird die Schweißvorrichtung SV von Figur 1 vorzugsweise in eine Druckkammer eingebracht, deren Luftdruck in vorgebbarer Weise zur Simulation verschiedener zugeordneter Ortshöhen verändert werden kann. In der Figur 1 ist diese Druckkammer mit zugehörigem Druckanzeiger strichpunktiert angedeutet. Die Druckkammer ist dabei mit DK sowie der Druckanzeiger mit P bezeichnet.

Zur Ermittlung der ohmschen Impedanz IP der Entladungsstrecke D wird für den jeweils vorherrschenden Luftdruck in der Druckkammer DK und damit für die zugehörige Ortshöhe die Brennspannung U des Glimmentladungsbogens bei fest vorgegebenem, noch nicht optimiertem Entladungsstrom I gemessen und daraus die ohmsche Impedanz IP nach dem ohmschen Gesetz $IP = U/I$ berechnet. Zur Spannungsmessung ist in der Figur 1 ein Spannungsmeßgerät MU zwischen die beiden Leitungen L1 und L2 der Elektroden EL1, EL2 mit Hilfe einer Querleitung L12 geschaltet. Das Spannungsmeßgerät MU übermittelt die gemessenen Spannungswerte U über eine Leitung L3 an eine Auswerte-/Steuereinrichtung CPU, die vorzugsweise Bestandteil des Lichtwellenleiter-Spleißgerätes ist. Die Auswerte-/Steuereinrichtung berechnet dann vorzugsweise jeweils den Impedanzwert unter Zuhilfenahme des ohmschen Gesetzes aus dem jeweilig gemessenen Spannungswert U und dem fest, d.h. konstant vorgegebenen Stromwert I. Der Druckanzeiger P liefert seine Druckmeßwerte entsprechend dazu über eine strichpunktiert eingezeichnete Signalleitung L20 an die Auswerte-/Steuereinrichtung CPU. Diese gibt zugleich über eine Steuerleitung L7 den gewünschten Sollwert SS für den Glimmentladungsstrom I an eine Stromregelvorrichtung SR weiter, die über eine Steuerleitung L8 den Hochspannungsgenerator HG entsprechend regelt. Zur Messung des Impedanzverlaufs HM von Figur 2 wird dabei der Glimmentladungsstrom I vorzugsweise auf einen bestimmten Wert fest eingestellt, insbesondere im vorliegenden Meßbeispiel von Figur 2 auf etwa 15 mA. Für die Ermittlung der Meßkurve HM von Figur 2 wurden beispielhaft zehn Impedanzwerte MW1 mit MW10 jeweils in Abständen von 500 m Höhenunterschied bestimmt. Die jeweilige Höhenlage bzw. Ortshöhe wurde dabei durch entsprechende Luftdruckveränderung in der Druckkammer simuliert. Als gemeinsame Verbindungslinie der einzelnen Impedanzmeßwerte MW1 mit MW10 ergibt sich beispielsweise durch Funktionen-Approximation in erster Näherung eine mit steigender Ortshöhe H fallende Geradenlinie. Die ohmsche Impedanz IP der Entladungsstrecke verringert sich also mit sinkendem Luftdruck, das heißt korresponierend dazu mit steigender Ortshöhe H. In erster Näherung betrachtet sinkt also die Impedanz IP mit dem Anstieg der Höhe H linear.

Diese empirisch gemessenen Impedanzwerte sowie deren zugehörige Höhenwerte können beispielsweise als Wertepaare in Tabellenform in der Auswerte-/Steuereinrichtung CPU von Figur 1 dauerhaft abgespeichert werden. Besonders zweckmäßig ist es, den Impedanzverlauf HM in Abhängigkeit von der Höhe H als kontinuierliche Funktion anzugeben und deren Formel in der Auswerte-/Steuereinrichtung CPU von Figur 1 dauerhaft abzulegen bzw. zu implementieren. Gegebenenfalls kann es auch möglich sein, den Zusammenhang zwischen der Impedanz IP und der Höhe H theoretisch herzuleiten und dafür eine theoretisch berechnete Formel anzugeben, die dann insbesondere in der Auswerte-/Steuereinrichtung CPU abgespeichert werden kann.

Für die experimentelle Messung der Impedanzwerte der Kurve HM in Abhängigkeit von der Höhe können selbstverständlich auch andere Meßmittel als die des Schweißgeräts selbst herangezogen werden.

Der derart experimentell ermittelte Impedanzverlauf HM in Abhängigkeit von der Höhe bzw. Ortslage H wird vorzugsweise einmalig in der Auswerte-/Steueinrichtung - insbesondere formelmäßig- abgespeichert bzw. implementiert, um im Schweißgerät für spätere, erst noch durchzuführende Fehlerkorrekturen der Schweißparameter Informationen über die Wechselwirkung zwischen Impedanz und Luftdruck zur Verfügung zu haben. Diese Eichmeßkurve HM wird vorzugsweise bereits werksseitig im Meßwertspeicher der Auswerte/Steuereinrichtung dauerhaft abgelegt.

Die Beeinflussung der ohmschen Impedanz in Abhängigkeit vom Verschmutzungsgrad der Elektroden läßt sich für die angestrebte Fehlerkorrektur von Störgrößen auf die Schweißparameter insbesondere bereits dadurch ausreichend berücksichtigen, daß vereinfachend lediglich für die zwei Elektrodenzustände „verschmutzt" sowie „sauber" jeweils die ohmsche Impedanz gemessen wird. Unter den gleichen Bedingungen wie für das Impedanz/Höhendiagramm IP/D von Figur 2 sowie für eine Höhe von etwa 500 m wurden folgende Impedanzen quantitativ für verschmutzte sowie saubere Elektroden gemessen.

Tabelle 1

| Elektrodenzustand | Impedanz in k$\Omega$ |
|---|---|
| verschmutzt | 32,6 |
| sauber | 32,0 |

Es liegt also im Beispiel ein Impedanzunterschied von etwa 0,6 k$\Omega$ zwischen den gemessenen Impedanzen für verschmutzte und saubere Elektroden vor. Als allgemeiner Zusammenhang zwischen Elektrodenzustand und Impedanz ergibt sich somit, daß sich die Impedanz mit zunehmender Elektrodenverschmutzung erhöht.

Weiterhin wurde durch Experimente gefunden, daß die tatsächliche Fasererwärmung- neben der Bauart der Entladungsstrecke - vorzugsweise durch folgende Faktoren im wesentlichen bestimmt wird:

- Umgebungsbedingungen (Luftdruck, Temperatur, Feuchtigkeit, Gaszusammensetzung),
- Elektrodenart und/oder Elektrodenzustand,
- Stromstärke der Glimmentladung.

Dies sind, abgesehen von der Frequenz der Glimmentladung, im wesentlichen die gleichen Faktoren, die auch die Impedanz des Lichtbogens vorrangig beeinflussen.

Im folgenden wird beispielhaft der Zusammenhang zwischen dem Luftdruck bzw. dessen korrespondierend zugeordneter Ortshöhe und der Fasererwärmung untersucht. Da sich die Fasererwärmung bzw. Fasertemperatur nur sehr aufwendig auf direktem Wege messen läßt, wurde für unterschiedliche Höhenlagen nicht die jeweils erreichte Fasertemperatur, sondern derjenige elektrische Entladungsstrom SS* gemessen, der für jeweils die gleiche, optimale Fasererwärmung erforderlich ist, um einen einwandfreien Spleiß herstellen zu können. Dafür wurde vorzugsweise ein separates Experiment durchgeführt. Die jeweilige Ortshöhe wurde dabei durch entsprechende Veränderung des Luftdrucks z.B. in der Druckkammer DK von Figur 1 simuliert. Bei der jeweilig simulierten Höhenlage wurden jeweils zwei Lichtleitfasern in das Spleißgerät sooft eingelegt und erneut miteinander verschweißt, bis sich zwischen ihnen durch wiederholte Variation des Entladungsstroms schließlich eine einwandfreie Spleißverbindung, insbesondere minimaler Übertragungsdämpfung ergab. Dieser optimale Entladungsstrom wurde dann für die jeweilige Ortslage festgehalten und registriert. Ein weiteres Eichmeßmeßverfahren, mit dem die jeweilige Fasererwärmung in Abhängigkeit von der Ortshöhe ermittelt werden kann, ist insbesondere mit Hilfe des Offset-Spleiß-Verfahrens, das in der DE - 1 96 44 304.0 (=Aktenzeichen) beschrieben ist, möglich. Die Figur 3 zeigt ein derart aufgenommenes Entladungsstrom/Höhendiagramm SS*/H in schematischer Darstellung. Die einzelnen Entladungsstrom- /Höhen-Wertepaare MP1 mit MP7 wurden in der Figur 3 durch eine z.B. approximativ gewonnene Meßkurve SM kontinuierlich miteinander verbunden. Die Meßkurve SM von Figur 3 steigt mit wachsender Höhe überproportional an. Bei geringem Luftdruck, das heißt in großer Ortshöhe bzw. Höhenlage, ist also ein wesentlich höherer elektrischer Entladestrom SS* für die gleiche, optimale Fasererwärmung erforderlich.

Bezüglich des Elektrodenzustandes ergibt sich insbesondere ein ähnlicher Effekt: für verschmutzte Elektroden läßt sich annäherungsweise die gleiche Fasererwärmung wie bei sauberen Elektroden bereits mit einem reduzierten Schweißstrom erhalten. Im vorliegenden Beispiel der Tabelle 1 wird der Schweißstrom zweckmäßigerweise um etwa 1 mA bei verschmutzten Elektroden reduziert, um dieselbe Fasererwärmung wie bei sauberen Elektroden zu erhalten.

Aus den aufgenommenen Meßkurven nach den Figuren 2 und 3 ergeben sich insgesamt betrachtet somit insbesondere folgende Zusammenhänge:

Je geringer der Luftdruck, das heißt je größer die Höhe ist, umso geringer ist die Impedanz der Entladungsstrecke. Je geringer der Luftdruck ist, umso geringer ist die Fasererwärmung.
Je stärker die Elektroden verschmutzt sind, umso höher ist die Impedanz der Entladungsstrecke.
Je stärker die Elektroden verschmutzt sind, umso höher ist auch die Fasererwärmung.

Der Einfluß des Luftdrucks bzw. dessen zugeordnete Ortshöhe auf die Impedanz ist dabei insbesondere annäherungsweise gleich stark ausgeprägt wie dessen Einfluß auf die Fasererwärmung. Eine Änderung des Elektrodenzustands, die eine bestimmte Impedanzänderung bewirkt, hat ebenfalls annäherungsweise etwa den gleichen Einfluß auf die Fasererwärmung wie eine Änderung des Luftdrucks, die die gleiche Impedanzänderung bewirkt. Mit anderen Worten heißt das, daß sich mit Hilfe der Meßkurven nach den Figuren 2 sowie 3, die zunächst nur die Abhängigkeiten der Impedanz bzw. des optimalen Schweißstroms von der Höhe zeigen, in vorteilhafter Weise auch ein entsprechender Korrekturfaktor bei Vorliegen einer Elektrodenverschmutzung ermitteln läßt, der für den eigentlichen, späteren Schweißvorgang zur Anpassung des Schweißvorgangs an den Gerätezustand erst noch eingestellt werden muß. Es genügen dafür in vorteilhafter Weise bereits allein die beiden, vorab im Schweißgerät implementierten Meßkurven nach den Figuren 2 und 3. Dabei wird insbesondere jeweils eine fest vorgegebene Anordnung der Entladungsstrecke, eine fest vorgegebene Frequenz der Entladung und ein fest vorgegebener Strom vorausgesetzt.

Aus diesen Zusammenhängen läßt sich folgern, daß die Impedanz der Entladungsstrecke als zuverlässiges Maß für die Fasererwärmung herangezogen werden kann. Damit kann insbesondere bei gegebenem Entladungsstrom, festgelegter Frequenz der Entladung sowie fest vorgegebener Anordnung der Entladungsstrecke in vorteilhafter Weise aus der Impedanz direkt auf die Fasererwärmung geschlossen werden. Sowohl Umwelteinflüsse als auch der Elektrodenzustand können dabei automatisch berücksichtigt werden.

Um für spätere Fehlerkorrekturen der Schweißparameter Informationen über den optimalen Soll-Schweißstrom SS* (siehe Figur 3) in Abhängigkeit von der Ortshöhe H im Schweißgerät zur Verfügung zu haben, wird die Meßkurve SM vorzugsweise einmalig als Formel (oder ggf. „digitalisiert", d.h. ihre Funktionswerte mit den zugehörigen Höhenwerten tabellarisch) in der Auswerte-/Steuereinrichtung CPU von Figur 1 dauerhaft abgespeichert. Diese Implementierung wird vorzugsweise bereits werksseitig vorgenommen.

Die gemessenen Strommeßwerte MP1 mit MP7 von Figur 3 bzw. die übrigen, durch Interpolation gefundenen Stromwerte der ermittelten Entladungsstromkurve SM geben für die jeweilige Höhenlage denjenigen Soll- Entladungsstrom SS* an, bei dem eine optimale, das heißt einwandfreie Verschweißung der beiden optischen Fasern erzielt werden kann. Die Entladungsstromkurve SM von Figur 3 ordnet also der jeweiligen Höhenlage H denjenigen Sollwert SS* für den Entladungsstrom zu, mit dem sich eine optimale Fasererwärmung, insbesondere minimaler Übertragungsdämpfung bei gleichzeitig ausreichender Zugfestigkeit, erzielen läßt. Auf diese Weise bildet die Strommeßkurve SM von Figur 3 eine Art Eichmeßkurve, die optimale, einzustellende Entladungsstromwerte SS* für die jeweils vorliegende Höhenlage vorsieht, um einen optimalen Spleiß herstellen zu können.

Um den eigentlichen Schweißvorgang von Umweltbzw. Umgebungseinflüssen, hier im Beispiel insbesondere vom Luftdruck, und/oder dem Elektrodenzustand weitgehend unabhängig zu machen, wird mit Hilfe der Auswerte/Steuereinrichtung CPU von Figur 1 die aktuelle Impedanz der Entladungsstrecke gemessen, die diese unter den momentan gegebenen Einsatzbedingungen sowie dem aktuellen Elektrodenzustand aufweist. Zur Ermittlung der Ist-Impedanz der Entladungsstrecke ist in der Figur 1 ein Strommeßgerät MI bekannter Bauart beispielsweise in die Stromleitung L1 für die erste Elektrode EL1 eingefügt. Das Strommeßgerät MI ist über eine Meßleitung L4 mit der Auswerte-/Steuereinrichtung CPU verbunden. Aus der mit dem Spannungsmeßgerät MU aufgenommenen Ist-Spannung U und dem mit dem Strommeßgerät MI aufgenommenen Ist-Strom I berechnet dann die Auswerte/Steuereinrichtung CPU die aktuell vorliegende Impedanz der Entladungsstrecke D nach dem ohmschen Gesetz: IP=U/I. Diesem ermittelten Ist-Impedanzwert wird mit Hilfe der abgespeicherten Impedanz-Meßkurve HM von Figur 2 in eindeutiger Weise eine bestimmte Höhenlage zugeordnet. Für diese Höhenlage ergibt sich aus der abgespeicherten Eichmeßkurve SM entsprechend Figur 3 der ideale, d.h. optimale Soll-Schweißstromwert SS*. Die Auswerte/Steuereinrichtung CPU gibt dann über die Steuerleitung L7 diesen gewünschten, erst noch einzustellenden optimalen Soll-Schweißstromwert SS* an die Stromregelungseinrichtung SR für den später folgenden, eigentlichen Schweißvorgang weiter. Diese Stromregelungseinrichtung SR regelt den Hochspannungsgenerator HG derart, daß für die Glimmentladung ein Entladungsstrom mit dem gewünschten, optimalen Soll-Schweißstromwert SS* zu fließen kommt. Die Stromregeleinrichtung SR vergleicht dabei den Ist-Stromwert I, der ihr vom Strommeßgerät MI über die Leitung L6 übermittelt wird, mit dem gewünschten Soll- Schweißstromwert SS*. Sie erzeugt insbesondere aus dem Differenzwert zwischen optimalen Soll- und Ist-Strom eine Stellgröße zur Beeinflussung des Hochspannungsgenerators derart, daß der Ist-Strom dem gewünschten, optimalen Soll-Schweißstromwert SS* angepaßt wird. Allgemein ausgedrückt sind also Meßmittel wie z.B. MU, MI zur Ermittlung der aktuell vorliegenden Ist-Impedanz IP der Entladungsstrecke D vorgesehen. Den Meßmitteln zugeordnete Steuermittel wie z.B. CPU, SR verändern dann aufgrund der gemessenen Ist- Impedanz IP mindestens einen der Schweißparameter der Schweißvorrichtung SV, insbesondere den Schweißstrom, derart, daß ein für die jeweiligen Umweltbedingungen und/oder für den jeweiligen Gerätezustand optimales Schweißergebnis erreichbar ist.

Wird für die Entladungsstrecke beispielsweise ein aktueller Impedanzwert von 31 k$\Omega$ ermittelt, so ordnet die Auswerte/Steuereinrichtung CPU von Figur 1 diesem Ist-Impedanzwert mit Hilfe der Wertetabelle bzw. Diagramms von Figur 2 eine Höhenlage von etwa 2500 m über NN (Normalnull, d.h. über Meeresspiegel) zu. Für diese Höhenlage entnimmt die Auswerte/Steuereinrichtung CPU aus der Tabelle von Figur 3 den gewünschten optimalen Soll-Schweißstromwert von etwa 17 mA, der für den eigentlichen, später auszuführenden Schweißvorgang erst noch eingestellt werden soll. Diesen optimalen Soll- Schweißstromwert gibt die Auswerte/Steuereinrichtung CPU an die Stromregelungseinrichtung SR zur Fehlerkorrektur über die Leitung L7 weiter. Sind für dieses Beispiel die Elektroden verschmutzt, so ergibt sich eine um etwa 0,6 k$\Omega$ erhöhte Impedanz von ca. 31,6 k$\Omega$, der in Figur 2 eine niedrigere Höhenlage von etwa 1500 m zugeordnet ist. Dieser Höhenlage weist die Auswerte/Steuereinrichtung CPU mit Hilfe des Diagramms von Figur 3 einen optimalen Soll-Schweißstromwert von etwa 16 mA zu, der gegenüber dem Soll-Schweißstromwert bei sauberen Elektroden um etwa 1 mA reduziert ist. Damit wird mit Hilfe der Meßdiagramme von Figur 2, 3 automatisch auch dem zusätzlichen Einfluß der Elektrodenverschmutzung Rechnung getragen.

Zusammenfassend betrachtet lassen sich also Umwelt- und/oder Geräteeinflüsse auf den Schweißvorgang dadurch berücksichtigen, daß die Impedanz der Entladungsstrecke für die jeweils vorgegebenen Umgebungs- und/oder Gerätebedingungen gemessen wird und aufgrund dieser gemessenen Impedanz dann mindestens einer der Schweißparameter, hier insbesondere der Entladungsstrom, so verändert wird, daß ein für diese vorgegeben Umwelt- und/oder Gerätebedingungen optimales Schweißergebnis erreicht wird. Aus der gemessenen Impedanz der Entladungsstrecke wird also auf die Umwelteinflüsse und/oder Geräteeinflüsse (insbesondere Elektrodenverschmutzung) geschlossen und deren Beeinträchtung des Schweißvorgangs durch entsprechende Korrektur bzw. Anpassung mindestens eines Schweißparameters eliminiert. Mit anderen Worten heißt das, daß eine Fehlerkompensation von störenden Umwelteinflüssen und/oder Gerätezuständen für den eigentlichen Schweißvorgang ermöglicht ist.

Gegebenenfalls kann sogar die Übergabe des Ist-Stromwertes an die Auswerte- /Steuereinrichtung CPU entfallen, da ja für die Stromregelungseinrichtung SR für die Impedanzmessung vorab ein Soll- Meßstromwert fest vorgegeben werden kann. Dieser Anfangsstromwert, der lediglich der Impedanzmessung dient, kann somit in der Auswerte-/Steuereinrichtung CPU als vorbekannt abgelegt werden. Die Stromregelungseinrichtung SR regelt den Hochspannungsgenerator HG dann stets auf diesen bekannten, fest vorgegebenen Soll-Meßstromwert zur Bestimmung der Ist- Impedanz aus. Die Auswerte-/Steuereinrichtung CPU kann somit die aktuelle Impedanz IP der Entladungsstrecke lediglich durch Messung der Ist-Spannung U und aus diesem bekannten, fix vorgegebenen Ist- Stromwert I berechnen, der aufgrund der Regelung gleich dem Soll-Meßstromwert ist. Erst danach regelt die Stromregeleinrichtung SR für den eigentlichen Schweißprozeß den Entladestrom gleich dem sich aus den Diagrammen von Figur 2 und 3 ergebenden optimalen Soll-Schweißstromwert SS*. In der Praxis wird also zweckmäßigerweise vor jedem Arbeitseinsatz des Spleißgeräts erst eine entsprechende Anpassung dessen Schweißparameter an die jeweils aktuell vorliegenden Umgebungsbedingungen und/oder dem Gerätezustand durchgeführt.

Die Fehlerkorrektur des Entladestroms kann mit Hilfe der Auswerte-/Steuereinrichtung CPU vorzugsweise automatisch erfolgen. Gegebenenfalls kann es auch zweckmäßig sein, von einer Bedienperson den jeweiligen, optimalen Soll-Schweißstromwert manuell einstellen zu lassen. Dabei kann die Auswerte-/Steuereinrichtung CPU dem Benutzer über ein Display DP den für eine optimale Verschweißung erforderlichen Soll-Schweißstromwert anzeigen. Ggf. kann dem Benutzer auch lediglich die gemessene Ist- Impedanz mitgeteilt werden. Der Benutzer selbst kann dann z.B. aus mitgelieferten Datenblättern, die die beiden Meßkurven nach Figur 3, 4 enthalten, den einzustellenden optimalen Schweißstromwert ablesen. Weiterhin kann ggf. auch die Auswerte/Steuereinrichtung CPU die Eichmeßkurven nach den Figuren 2 und 3 mit Hilfe eines Displays dem Benutzer anzeigen, wie dies in Figur 1 innerhalb der schematisch gezeichneten Auswerte-/Steuereinrichtung CPU schematisch angedeutet und mit DP bezeichnet ist. In beiden Fällen kann dann der Benutzer selbst den abgelesenen oder angezeigten, optimalen Soll- Schweißstromwert mit Hilfe einer Stromvorgabevorrichtung SV der Auswerte-/Steuereinrichtung CPU vorgeben, die über eine Steuerleitung L9 mit der Stromvorgabevorrichtung SV verbunden ist.

Zur Kompensation von störenden Umwelt-/Umgebungseinflüssen auf den Schweißvorgang sind folgende Vorgehensweisen zweckmäßig:

1. separate Impedanzmessung:

Dazu wird vorab, d.h. entweder direkt nach dem Einschalten des Lichtwellenleiter-Spleißgerätes oder vor dem eigentlichen Schweißprozeß bzw. Schweißvorgang - und zwar noch vor dem Einlegen der miteinander zu verschweißenden optischen Fasern in das Spleißgerät - bei irgendeinem, voreingestelltem Strom die Ist-Impedanz der Entladungsstrecke unter den aktuell vorliegenden Umweltbedingungen und/oder dem aktuell vorliegenden Gerätezustand gemessen. Aus dem Ergebnis wird mit Hilfe der vorzugsweise einmalig aufgenommenen und festgehaltenen, insbesondere abgespeicherten Eichmeßkurven entsprechend den Figuren 2 und 3 berechnet, welcher Soll-Schweißstromwert SS* erforderlich ist, um die gewünschte, optimale Fasererwärmung zu erreichen. Dieser optimale Schweißstromwert wird dann insbesondere automatisch mit Hilfe der Auswerte-/Steuereinrichtung CPU von Figur 1 eingestellt. Dieses Verfahren zeichnet sich vor allem dadurch aus, daß es besonders einfach zu realisieren ist. Aus den Kurven der Figuren 2 und 3 läßt sich direkt ein entsprechender Stromkorrekturfaktor (=SS*/I, d.h. optimaler Soll-Schweißstromwert SS* dividiert durch Ist-Stromwert I) ermitteln.

In vorteilhafter Weise kann ggf. die Ist-Stromauswertung mit der Auswerte-/Steuereinrichtung zur Impedanzauswertung sogar entfallen, da der Stromregelungsschaltung SR ein bestimmter Meßstromwert fest vorgebbar ist, auf den die Stromregelungsschaltung SR stets zur Impedanzmessung ausregelt. Da die Impedanzmessung vorab erfolgt, können mit dieser Korrekturmethode allerdings nachträgliche Veränderungen wie zum Beispiel des Elektrodenzustands nicht berücksichtigt werden. Da solche Änderungen normalerweise nur langsam eintreten, ist diese Vorabkorrektur des Entladestroms unter einer Vielzahl praktischer Gegebenheiten ausreichend. Gegebenenfalls kann auch die Impedanzmessung von Zeit zu Zeit oder sogar vor jedem einzelnen Spleiß wiederholt werden.

2. Echtzeit-Impedanzmessung:

Hierbei erfolgt die Impedanzmessung jeweils in Echtzeit, das heißt während des eigentlichen produktiven Schweißvorgangs. Um eine Fehlerkorrektur zu ermöglichen, sind die Zusammenhänge zwischen Impedanz und Höhe, Soll-Schweißstromwert und Höhe entsprechend den Figuren 2 und 3 zweckmäßigerweise für alle in Frage kommenden Schweißströme vorab ermittelt und im Meßwertspeicher des Spleißgeräts abgespeichert worden. Die Anpassung des Stroms kann je nach Meßergebnis entweder unmittelbar, das heißt noch während des laufenden Schweißvorgangs oder allmählich, das heißt mit Wirkung erst für die folgenden, noch zu fertigenden Spleiße vorgenommen werden. Da die Impedanz unmittelbar während des eigentlichen Schweißvorgangs gemessen wird, werden auch nachträgliche Änderungen der Einflußgrößen in vorteilhafter Weise berücksichtigt. Allerdings kann für diese Korrekturmethode nicht von irgendeinem fest vorgegebenen Anfangsstromwert bzw. Meßstromwert ausgegangen werden, da der Schweißstrom bereits an die jeweiligen Umgebungsbedingungen und/oder den Gerätezustand in erster Näherung angepaßt sein sollte, um Beschädigungen oder Beeinträchtigungen der Lichtleitfasern durch den Meßvorgang für die Impedanzbestimmung zu vermeiden. Bei dieser Echtzeit-Impedanzmessung befinden sich die miteinander zu verschweißenden optischen Fasern bereits im Lichtbogen. Die dadurch hervorgerufenen Änderungen der Impedanz sind allerdings in der Praxis sehr gering, so daß sie vernachlässigbar sind.

3. Kombinierte Methode:

Hierbei wird die Impedanzmessung vor jeder Spleißanfertigung erneut durchgeführt. Aus Gründen des praktischen Ablaufs sind die optischen Fasern in das Spleißgerät vorzugsweise bereits eingelegt. Um Beschädigungen oder unzulässige Beeinträchtigungen der optischen Fasern zu vermeiden, wird der Meßstrom zur Ermittlung des richtigen Strom-Korrekturfaktors zweckmäßigerweise so gering gewählt, daß die optischen Fasern noch nicht schmelzen. Der eigentliche Schweißvorgang kann wahlweise direkt im Anschluß an die Impedanzmessung oder nach einer Abkühlphase erfolgen. Mit Hilfe dieser Korrekturmethode lassen sich Veränderungen der Umwelt-/Umgebungsbedingungen und/oder des Gerätezustandes besser berücksichtigen. Vorzugsweise wird der Meßstrom zur Messung der Impedanz der Entladungsstrecke zwischen 5 und 10 mA, bevorzugt um etwa 8 mA gewählt.

Figur 4 veranschaulicht den Aufbau des Hochspannungsgenerators HG von Figur 1 schematisch im Detail. Er weist einen Transformator TR mit den Spulenhälften PR1, PR2 auf der Primärseite sowie mit der Spule SEK auf der Sekundärseite auf. An die Sekundärseite des Transformators sind über die Leitungen L1, L2 die beiden Elektroden EL1, EL2 angeschlossen. Das Spannungsverhältnis zwischen Primär- -und Sekundärseite ist in erster Näherung durch das Verhältnis der Windungszahlen der Primär- und Sekundärspulen festgelegt und somit konstant. Das Übertragungsverhältnis zwischen der jeweiligen Primärspule PR1 bzw. PR2 und der Sekundärspule SEK wird zweckmäßigerweise derart gewählt, daß aus einer relativ niedrigen Spannung auf der Primärseite eine dergegenüber wesentlich höhere Spannung auf der Sekundärseite zum Betreiben des Glimmentladungs-Lichtbogens erzeugt wird. Da das Übertragungsverhältnis zwischen Primär- und Sekundärseite konstant ist, kann die Spannung auf der Primärseite annäherungsweise als Maß für die Sekundärspannung dienen, d.h. es ist nicht erforderlich, die tatsächliche Spannung U zwischen den beiden Elektroden EL1, EL2 direkt zu messen. Etwa in der Mitte der Primärwicklung ist über eine Leitung L10 eine Gleichspannungsquelle UQ gegenüber Masse angeschlosen. Eingangsseitiges sowie ausgangsseitiges Ende der Primärwicklung sind über zugehörige Leitungen L11 bzw. L12 mit elektronischen Schaltern ES1 bzw. ES2 verbunden, die einseitig ebenfalls an Masse gelegt sind. Die beiden elektronischen Schalter ES1, ES2 werden von einer Steuervorrichtung STE über Steuerleitungen SL1, SL2 wechselweise aktiviert, so daß abwechselnd durch die obere oder durch die untere Hälfte der Primärwicklung, das heißt durch die Spule PR1 oder PR2 ein Strom fließen kann. Im Endeffekt ergibt sich auf der Sekundärseite SEK dadurch eine Wechselspannung. Die Steuervorrichtung STE wird über die Leitung L8 von der Stromregeleinrichtung SR angesteuert. Diese Stromregeleinrichtung SR von Figur 1 erhält die Information über den Ist-Strom über die Leitung L6 (siehe Figur 1) sowie den jeweilig gewünschten, einzustellenden Soll-Stromwert über die Steuerleitung L7 von der Auswerte/Steuereinrichtung CPU. Sie gibt zum Beispiel durch Differenzbildung zwischen Ist-Stromwet und Soll-Stromwert ein entsprechendes Steuersignal für die Steuervorrichtung STE vor, die die Primärspannung derart verändert, daß sich der jeweils gewünschte Soll-Stromwert einstellt. Zu diesem Zweck kann die Steuerschaltung STE insbesondere mindestens eine der folgenden Größen einzeln für sich oder in Kombination variieren:

1. Höhe der Speisespannung SU;
dazu steuert die Steuereinrichtung STE über die Steuerleitung SL3 die Gleichspannungsquelle UQ an und regelt die Höhe deren Speisespannung SU derart ein, daß der gewünschte Soll-Stromwert erreicht wird. Dabei wird das Einschalt/Pausenverhältnis der Schalter ES1, ES2 vorzugsweise konstant gewählt, insbesondere etwa gleich 100%, das heißt es ist stets einer der beiden Schalter geschlossen.

2. Einschalt/Pausenverhältnis (= Tastverhältnis) der Schalter ES1, ES2, was einer Pulsbreitenregelung der Primärspannung mit Aktiv- und Totzeiten entspricht;
dazu werden die Schalter ES1, ES2 über Steuerleitungen SL1, SL2 von der Steuereinrichtung STE aus entsprechend betätigt, d.h. mit einem derartigen Tastverhältnis zueinander geschlossen und geöffnet, daß der gewünschte Soll- Stromwert erreicht wird. Dabei ist die Speisespannung SU vorzugsweise konstant gewählt.

In beiden Fällen ist die Messung der Primärspannung als Maß für die Sekundärspannung sehr einfach möglich, weil

- die Höhe der Speisespannung SU in erster Näherung direkt proportional zur wirksam werdenden Primär- sowie Sekundärspannung ist,
- das Einschalt/Pausenverhältnis der Schalter ES1, ES2 ein Maß für die wirksam werdende Primär- sowie Sekundärspannung ist.

Aus der so bestimmten Primärspannung SU, dem Übersetzungsverhältnis Ü des Transformators TR und dem jeweils vorgegebenen Stromwert I (=konstant) kann die ohmsche Impedanz der Entladungsstrecke direkt ermittelt werden zu:

$$IP = (SU \cdot Ü)/I$$

Damit ergibt sich in vorteilhafter Weise eine wesentliche praktische Vereinfachung zur Bestimmung der Impedanz der Entladungsstrecke und Einstellung des jeweils gewünschten Soll-Stromwertes. Denn es ist nicht mehr erforderlich, die Impedanz (der Entladungsstrecke) selbst explizit zu berechnen. Es genügt anstelle dessen bereits, als mittelbare, impedanzabhängige Meßgröße die erforderliche Speisespannung für einen bestimmten, gewünschten Stromwert und/oder die Pulsbreite und/oder die Frequenz für die Primärspannung, das heißt das Tastverhältnis der Schalter ES1, ES2 für einen bestimmten, einzustellenden Soll-Stromwert, zu erfassen.

Anstelle von Impedanzwerten werden dann entlang der Ordinaten des Diagramms von Figur 2 zweckmäßigerweise Tastverhältnisse der Schalter ES1, ES2 oder die Höhe der Speisespannung SU in Abhängigkeit von der Ortshöhe H aufgetragen. Es werden also bei einem vorgegebenen Meßstrom die dafür erforderlichen Tastverhältnisse oder die Höhe der Speisespannung SU in Abhängigkeit von der Ortshöhe H in der Auswerte/Steuereinrichtung (als Tabelle oder Funktion) einmalig abgespeichert. Entsprechend dazu werden für das Meßdiagramm nach Figur 3 diejenigen Speisespannungswerte und/oder Tastverhältnisse ermittelt, die in verschiedenen Höhenlagen jeweils die selbe, optimale Fasererwärmung hervorrufen. Damit der jeweils gewünschte Soll- Vorgabestrom erreicht wird, wird mit Hilfe der Steuereinrichtung STE das Tastverhältnis der Schalter ES1, ES2 und/oder die Höhe der Speisespannung SU entsprechend geregelt.

Allgemein ausgedrückt genügt es also in vorteilhafter Weise, anstelle der Impedanz selber eine einzige, andere Meßgröße zu erfassen, die hinreichend stark von der Impedanz abhängt. Diese Ersatzmeßgröße wird im Feldeinsatz durch Umwelteinflüsse und/oder den Elektrodenzustand ebenso wie die Impedanz beeinflußt. Es kann deshalb für die jeweilige Ersatzmeßgröße in analoger Weise aus dem Diagrammen der Figuren 2, 3 ein Strom-Korrekturfaktor ermittelt werden, der den Einfluß von Umwelteinflüssen und Elektrodenzustand auf die Fasererwärmung und die Impedanz berücksichtigt. Die Korrektur des Stroms erfolgt derart, daß der störende Einfluß der Umweltbedingungen und des Elektrodenzustands bezüglich der Fasererwärmung kompensiert wird. Der vom Benutzer oder vom Gerät vorgegebene Meßstromwert für die Impedanzbestimmung bzw. deren Ersatzgröße wird mit Hilfe des Korrekturfaktors in einen korrigierten Strom umgerechnet, der unter den tatsächlichen Bedingungen die gleiche Fasererwärmung erzielt wie der vorgegebene Meßstrom-Sollwert unter Normalbedingungen, das heißt, saubere Elektroden, geringe Höhe, trockene Luft usw.. Die Umrechnung der Impedanz bzw. Meßgröße in einen Strom bzw. Strom-Korrekturfaktor kann wahlweise auf folgende Art erfolgen:

- anhand einer empirisch ermittelten Tabelle,
- anhand von empirisch ermittelten Formeln,
- anhand theoretisch ermittelter Formeln.

Schließlich kann als weiterer Schweißparameter auch die Schweißzeit verändert werden, um aufgrund der gemessenen Impedanz Störungen beim Schweißvorgang, die durch Umgebungseinflüsse und/oder Geräte-, insbesondere Elektrodenzustände hervorgerufen sein können, kompensieren zu können. Dazu wird die Schweißzeit bezogen auf einen vorgegebenen Meßstromwert zur Erzielung eines optimalen Schweißergebnisses zweckmäßigerweise umso größer gewählt, je größer die Höhe wird, die mit Hilfe der Figuren 2, 3 der jeweiligen Meßgröße (wie z.B. dem Ist-Schweißstromwert I) zur Korrektur zugeordnet wird.

Weiterhin ist es auch möglich, anstelle der Regelung der Glimmentladung über den Entladestrom auch eine Regelung über die Leistung durchzuführen. Bezugnahmen im vorangehenden Beschreibungstext auf den Strom sind hierbei durch den Begriff Leistung zu ersetzen. Es wird also in analoger Weise zur Korrektur der Umwelt-/Geräteeinflüsse ein Vergleich von Ist-Leistung und Soll-Schweißleistung durchgeführt und daraus ein Leistungskorrekturfaktor ermittelt. In der Figur 3 wäre an der Ordinaten anstelle des optimalen Soll-Schweißstromwertes SS* die gemessene, optimale Soll-Schweißleistung aufzutragen. Ein solches modifiziertes Soll-Leistungs-/Höhen- Diagramm weist dabei eine Meßkurve auf, die gegenüber der Form der Meßkurve SM von Figur 3 lediglich geringförmig verzerrt ist. Entsprechend dazu ergabe sich auch für die Meßkurve HM von Figur 2 durch die Leistungsregelung eine geringfügige Verzerrung. Beim Arbeiten mit der Schweißleistung ergeben sich analog zum aufgezeigten Korrekturbeispiel für den Entladestrom folgende Zusammenhänge:

Mit sinkendem Luftdruck wächst die erforderliche Schweißleistung, die zur Erzeugung gleicher, optimaler Fasererwärmung wie unter Normalbedingungen erforderlich ist. Denn die zur Erzielung optimaler Schweißergebnisse erforderliche Schweißleistung varriert in Abhängigkeit von den Umwelt-und/oder Geräteeinflüssen.

Zusammenfassend betrachtet wird der Einfluß von Umgebungsbedingungen, insbesondere hauptsächlich des Luftdrucks, dadurch kompensiert, das heißt das Schweißergebnis von den Umgebungsbedingungen dadurch weitgehend unabhängig gemacht, daß die Impedanz der Glimmentladungsstrecke gemessen und ausgewertet wird. Dafür sind keine zusätzlichen Sensoren, insbesondere Drucksensoren erforderlich. Die Auswertung der gemessenen Impedanz kann dabei mit den bereits vorhandenen Komponenten herkömmlicher Lichtwellenleiter-Spleißgeräte durchgeführt werden, das heißt der Aufwand zur Implementierung der Fehlerkorrektur von Umwelteinflüssen auf die tatsächlich erzielte Fasererwärmung kann ohne Aufwand durchgeführt werden. Gleichzeitig wird der Einfluß verschmutzter Elektroden automatisch, d.h. ohne eigens weitere Korrekturmessungen durchführen zu müssen, mit berücksichtigt.

Zusätzlich oder unabhängig von der Kompensation störender Umgebungseinflüsse, insbesondere des Luftdrucks, kann nach demselben Prinzip ggf. auch der Zustand der Elektroden - insbesondere bei bekanntem Luftdruck bzw. bekannter Ortshöhe - ermittelt und dieser Schweißparameter korrigiert werden. Dies kann insbesondere zweckmäßig sein, um die beschriebene Kompensation von Umgebungseinflüssen, insbesondere von Luftdruckveränderungen, hinreichend genau durchführen zu können. Sind nämlich die Elektroden übermäßig stark verschmutzt, so ist deren Reinigung oder Austausch angebracht.

Für die Bestimmung des Elektrodenzustandes, der einen weiteren Schweißparameter darstellt, wird der funktionale Zusammenhang zwischen der Impedanz und der Höhe vorzugsweise auf folgende Art und Weise ermittelt:

Zunächst wird vorzugsweise werksseitig der Verlauf der Impedanz in Abhängigkeit von der Höhe ermittelt. Dies kann wie zu Figur 2 beschrieben erfolgen. Dabei wird diese Messung mit Elektroden durchgeführt, deren Verschmutzungsgrad gerade noch für gute Spleißergebnisse akzeptabel ist. Es ergibt sich eine Grenzwertkurve ähnlich Figur 2. Diese Grenzwertkurve stellt die für gute Spleißergebnisse maximal zulässige Impedanz in Abhängigkeit von der Höhe dar. Die Kurve braucht dabei vorzugsweise nur einmalig ermittelt werden und kann dann in geeigneter Form, z.B. als Wertetabelle oder als funktionaler Zusammenhang dauerhaft, d.h. fest im Meßwertspeicher der Auswerte-/Steuereinrichtung abgespeichert werden. Mit dieser abgespeicherten Grenzwertkurve werden die Spleißgeräte zweckmäßigerweise ausgeliefert, so daß diese Grenzwertkurve im Feldeinsatz dauerhaft zur Verfügung steht.

Die eigentliche Impedanzmessung zur Beurteilung des aktuellen Elektrodenzustands im Feldeinsatz erfolgt dann vorzugsweise in folgenden Schritten:

1. Bestimmung des Luftdrucks: Der tatsächliche Luftdruck bzw. die tatsächliche Höhe zum Zeitpunkt der Messung kann entweder manuell (z.B. bei Kenntnis der Ortshöhe aus einer Höhen-Landkarte) eingegeben oder automatisch z.B. mit Hilfe eines Drucksensors ermittelt werden. Aus der festgehaltenen Grenzwertkurve wird nun mittels dieses bekannten Luftdruckwerts abgelesen, welcher Impedanzwert für die jeweilige Höhe maximal zulässig ist.

2. Impedanzmessung: Die Messung der Impedanz der Glimmentladung erfolgt entsprechend der zu den Figuren 2, 3 beschriebenen Weise, d.h auch in diesem Fall wird die Impedanz der Entladungsstrecke während der Glimmentladung gemessen. Diese liegt umso höher, je stärker die Elektroden verschmutzt sind. Somit stellt die Impedanz ein Maß für den Verschmutzungs- bzw. Abnutzungsgrad der Elektroden dar.

3. Auswertung: Wenn die gemessene Impedanz höher als ein oberer, zulässiger Schwellwert liegt, der sich für den jeweiligen Luftdruck aus der Grenzwertkurve ergibt, wird an den Benutzer zweckmäßigerweise ein akustisches Warnsignal z.B. mittels eines Lautsprechers SPR an der Auswerte/Steuereinrichtung CPU ausgegeben oder eine entsprechende Warnmeldung angezeigt (z.B. im Display DP der Auswerte/Steuereinrichtung CPU von Figur 1). Die Bedienperson kann daraufhin die Elektroden reinigen oder austauschen. Dies kann ggf. auch automatisch durch das Spleißgerät selbst erfolgen. So können die Elektroden z.B. dadurch in einfacher Weise gereinigt werden, daß eine hohe Brennspannung über einen längeren Zeitraum an die Elektroden angelegt wird, die Schmutzpartikel wegbrennt.

Auf diese Weise kann in einfacher Weise sichergestellt werden, daß die Elektroden immer in ausreichend gutem Zustand sind. Dabei wird unnötig häufiges prophylaktisches Reinigen oder Wechseln der Elektroden nach einer bestimmten Anzahl von Spleißungen vermieden.

Das erfindungsgemäße Verfahren ist bei allen Spleißgeräten für Lichtwellenleiter, die die Fasererwärmung mittels elektrischer Glimmentladung durchführen, anwendbar. Es spielt keine Rolle, ob es sich um ein Gerät für Einzelfasern oder für mehrere Fasern handelt, und ob das Gerät über eine x, y, z-Positionierung verfügt oder mit feststehenden V-Nuten (das heißt ohne x-y-z-Positionierung) arbeitet. Weitere Komponenten des Schweißgerätes, wie Beleuchtung und Optiksystem, Videokameras, Videobildverarbeitungseinrichtung und dergleichen sind für das Kompensationsverfahren von Umwelt- und Umgebungs- und/oder Geräteeinflüssen weit weniger oder gar nicht von Bedeutung und wurden deshalb der Übersichtlichkeit halber in der Figur 1 nicht dargestellt.

**Patentansprüche**

1. Verfahren zum Verbinden der beiden Enden mindestens zweier optischer Fasern (LF1, LF2) mittels eines elektrischen Lichtbogens (LB), der zwischen zwei Elektroden (EL1, EL2) erzeugt wird, **dadurch gekennzeichnet,** daß die Impedanz (IP) der Entladungsstrecke (LB) gemessen wird, und daß aufgrund der gemessenen Impedanz (IP) mindestens einer der Schweißparameter so verändert wird, daß ein für die jeweiligen Umweltbedingungen und/oder für den jeweiligen Gerätezustand optimales Schweißergebnis erreicht wird.

2. Verfahren nach Anspruch 1, **dadurch gekennzeichnet,** daß als Schweißparameter der Schweißstrom (I) verändert wird.

3. Verfahren nach einem der vorhergehenden Ansprüche, **dadurch gekennzeichnet,** daß als Schweißparameter die Schweißzeit verändert wird.

4. Verfahren nach einem der vorherghenden Ansprüche, **dadurch gekennzeichnet,** daß als Schweißparameter die Schweißleistung verändert wird.

5. Verfahren nach einem der vorhergehenden Ansprüche, **dadurch gekennzeichnet,** daß vor dem Schweißvorgang und vor dem Einlegen der Fasern in das Schweißgerät (SG) die Impedanz (IP) gemessen wird.

6. Verfahren nach einem der vorhergehenden Ansprüche, **dadurch gekennzeichnet,** daß vor dem Schweißvorgang und nach dem Einlegen der Fasern (LF1, LF2) in das Schweißgerät (SG) die Impedanz (IP) vor dem eigentlichen Schweißvorgang gemessen wird.

7. Verfahren nach einem der vorhergehenden Ansprüche, **dadurch gekennzeichnet,** daß die Impedanz (IP) in Echtzeit während des Schweißvorganges gemessen wird.

8. Verfahren nach einem der vorhergehenden Ansprüche, **dadurch gekennzeichnet,** daß eine Vorabmessung und eine Echtzeitmessung vorgenommen werden und daß aufgrund der Vorabmessung eine Voreinstellung für die Echtzeitmessung vorgenommen wird.

9. Verfahren nach einem der vorhergehenden Ansprüche, **dadurch gekennzeichnet,** daß als Schweißparameter die Elektroden (EL1, EL2) gereinigt oder ausgetauscht werden.

10. Verfahren nach einem der vorhergehenden Ansprüche,
**dadurch gekennzeichnet,**
daß die Impedanz (IP) während des Glimmentladungsvorgangs des Lichtbogens (LB) gemessen wird.

11. Vorrichtung zum Verbinden der beiden Enden mindestens zweier optischer Fasern (LF1, LF2) mittels eines elektrischen Lichtbogens (LB) zwischen zwei Elektroden (EL1, EL2), insbesondere nach einem der vorhergehenden Ansprüche,
**dadurch gekennzeichnet,**
daß Meßmittel (MU, MI) zur Ermittlung der Impedanz (IP) der Entladungsstrecke (D) vorgesehen sind, und daß Steuermittel (CPU, SR) aufgrund der gemessenen Impedanz (IP) mindestens einen der Schweißparameter so verändern, daß ein für die jeweiligen Umweltbedingungen und/oder für den jeweiligen Gerätezustand optimales Schweißergebnis erreichbar ist.

# FIG 1

FIG 2

FIG 3

# FIG 4